# DEMANDE DE BREVET EUROPEEN

(11) **EP 1 808 532 A1**
(43) Date de publication de la demande: **18.07.2007**
(21) Numéro de dépôt: 07358001.1
(22) Date de dépôt: 09.01.2007
(51) Int. Cl.: E01H 1/00, A01K 1/01

(54) **Dispositif de propreté destiné à recueillir les déjections canines**

(30) Priorité: 17.01.2006 FR 0600397
(71) Demandeur: Scola, Michel, 13122 Ventabren (FR)
(72) Inventeur: Scola, Michel, 13122 Ventabren (FR)
(74) Mandataire: Roman, Michel

(57) **Abrégé**

La présente invention a pour objet un dispositif de propreté destiné à recueillir les déjections canines.

Il est constitué de l'association d'une borne (3) et d'un plancher formé de lames parallèles jointives pivotant selon un axe horizontal et disposées au-dessus d'un bac (1) relié à une fosse septique (5) apte à recueillir les déjections des chiens, les lames étant actionnées par un moteur électrique (6) installé dans un caisson étanche (7) enfoui dans le sol au dessous de la borne.

L'invention se rapporte d'une manière générale au matériel ayant pour objet le maintien de la propreté des sols dans les lieux publics ou privés et de faciliter, pour les propriétaires de chiens, le respect de l'environnement.

## Description

La présente invention a pour objet un dispositif de propreté destiné à recueillir les déjections canines.

Elle se rapporte d'une manière générale au matériel ayant pour objet le maintien de la propreté des sols dans les lieux publics ou privés et de faciliter, pour les propriétaires de chiens, le respect de l'environnement.

Actuellement, les chiens déposent leurs déjections sur les trottoirs dans les rues ou sur les pelouses, ce qui engendre des désagréments divers, un risque d'accidents et une pollution olfactive et visuelle.

Les dispositions connues ne donnent pas satisfaction sur le plan de l'hygiène et de la sécurité, prennent insuffisamment en compte le comportement animal, n'incitent pas au civisme et ne favorisent pas la cohabitation des hommes et des animaux.

Le brevet N° FR 2 794 613, déposé par MM GARCIA et NICOLAIEFF, décrit un dispositif destinée à recueillir et à évacuer les déjections et les lisiers des animaux en maintenant les sites équipés en état satisfaisant d'hygiène et de propreté.

Ce dispositif est constitué d'un plateau d'usage à lames dont la rotation à 180° permet l'évacuation des matières dans un caisson relié au réseau d'assainissement. Un système de déclenchement mécanique, électrique ou hydraulique met les lames en mouvement et simultanément envoie la pression dans une rampe de lavage à l'eau additionnée de produits sanitaires et constituée de rangées de gicleurs disposés sous chaque lame.

Le raccordement au réseau d'assainissement limite le domaine d'application du système et entraîne des travaux coûteux de mise en oeuvre.

Le dispositif selon la présente invention a pour objectif de remédier à cet état de choses. Il consiste en une série de perfectionnements du système décrit dans le brevet ci-dessus et permet d'attirer les animaux, de recueillir et évacuer leurs souillures dans les meilleures conditions, de laver les sites et d'assurer une hygiène permanente, tout en pouvant s'adapter à tous les lieux et en n'exigeant pas d'installation complexe.

Il est constitué de l'association d'une borne et d'un plancher formé de lames parallèles jointives pivotant selon un axe horizontal et disposées au-dessus d'un bac relié à une fosse sceptique apte à recueillir les déjections des chiens, les lames étant actionnées par un moteur électrique installé dans un caisson étanche enfoui dans le sol au dessous de la borne.

Sur les dessins annexés, donnés à titre d'exemple non limitatif d'une forme de réalisation conforme à la présente demande :
la figure 1 représente l'objet de l'invention vu de l'avant en perspective
et la figure 2 est une vue de côté en élévation du dispositif.

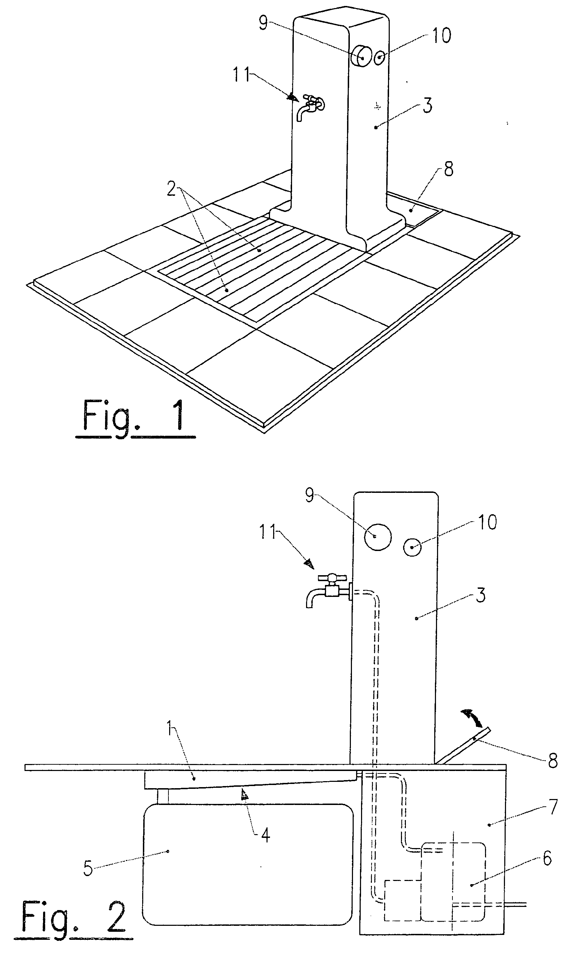

Le dispositif, figures 1 et 2, est constitué d'un bac 1 recouvert de lames pivotantes 2 formant plancher et d'une borne 3 située en bout de ce plancher et sur laquelle sont disposées les commandes déclenchant le nettoyage des lames.

Le bac 1 est inséré dans un élément surélevé ou encastré dans le sol et comporte un fond incliné 4 dont la partie la plus basse est raccordée à une cuve sceptique 5 de préférence enterrée dans le sol au-dessous du bac. Cette fosse peut éventuellement être elle-même reliée au réseau d'égout.

A l'intérieur du bac sont disposées des rampes de lavage de type courant (non représentées) agencées pour nettoyer la face inférieure des lames 2 après que ces dernières, une fois chargées de déjections, effectuent une rotation de 360° grâce à un mécanisme tel que système d'engrenages entraîné par un moteur 6 électrique. Ce mécanisme comportera avantageusement des ralentisseurs freinant le mouvement des lames en fin de rotation, afin d'augmenter leur durée de vie et de diminuer le bruit.

Les extrémités des axes des lames pivotantes 2 seront de préférence montées dans des roulements à billes ou à aiguilles.

Afin d'assurer une protection contre le gel et les infiltrations éventuelles, le moteur 6 actionnant les lames est installé dans un caisson étanche 7 enfoui dans le sol au dessous de la borne 3 et pourvu d'une trappe d'accès 8 située derrière ladite borne.

Il sera avantageusement prévu un élément d'injection d'additifs dans l'eau de lavage tels que liquide "olfactif" apte à attirer les chiens ou désinfectant (javel ou autre), ou encore produit spécifique à étudier avec des laboratoires et l'aide de vétérinaires.

La borne 3 comporte, de préférence en partie haute de l'un des côtés, une commande de rotation 9 et une commande de lavage 10 des lames 2. La seconde commande peut éventuellement être supprimée en prévoyant un dispositif de déclenchement automatique du lavage actionné par le mécanisme de rotation des lames pivotantes.

Sur la face avant de la borne est prévu un robinet 11 pour le lavage des mains et la boisson des chiens et éventuellement le nettoyage des abords de l'installation à l'aide d'un tuyau.

La borne 3 pourra être signalée par bandes fluorescentes ou leds solaires et comportera avantageusement tous les accessoires permettant de faciliter la tâche des usagers, en particulier :
- un distributeur de gants ou de papier de nettoyage fonctionnant éventuellement grâce à des jetons distribués par exemple par la mairie,
- un réceptacle pour jeter les articles pris au distributeur
- un "coup de poing" de signalisation en cas de morsure.

Le positionnement des divers éléments constitutifs donne à l'objet de l'invention un maximum d'effets utiles qui n'avaient pas été, à ce jour, obtenus par des dispositifs similaires.

## Revendications

1. Dispositif de propreté destiné à recueillir les déjections canines, ayant pour objet le maintien de la propreté des sols dans les lieux publics ou privés et de faciliter, pour les propriétaires de chiens, le respect de l'environnement, constitué de l'association d'une borne (3) et d'un plancher formé de lames rotatives (2) parallèles et jointives pivotant selon un axe horizontal,
**caractérisé en ce que** les lames pivotantes (2) sont actionnées par un moteur électrique (6) installé dans un caisson étanche (7) enfoui dans le sol au dessous de la borne (3) et sont disposées au-dessus d'un bac (1) relié à une fosse sceptique (5) apte à recueillir les déjections des chiens.

2. Dispositif selon la revendication 1, **se caractérisant par le fait que** les lames pivotantes (2), une fois chargées de déjections, sont agencées pour effectuer une rotation de 360° grâce à un mécanisme entraîné par le moteur électrique (6) de façon à nettoyer leur faces inférieures au moyen de rampes de lavage disposées à l'intérieur du bac (1), ledit mécanisme comportant des ralentisseurs freinant le mouvement desdites lames pivotantes en fin de rotation.

3. Dispositif selon l'une quelconque des revendications précédentes, **se caractérisant par le fait qu'**il est équipé d'un élément d'injection d'additifs dans l'eau de lavage tels que liquide olfactif apte à attirer les chiens ou désinfectant.

4. Dispositif selon l'une quelconque des revendications précédentes, **se caractérisant par le fait que** les extrémités des axes des lames pivotantes (2) sont montées dans des roulements à billes ou à aiguilles.

5. Dispositif selon l'une quelconque des revendications précédentes, **se caractérisant par le fait que** la borne (3) comporte une commande de rotation (9) et une commande de lavage (10) des lames pivotantes (2).

6. Dispositif selon l'une quelconque des revendications 1 à 4, **se caractérisant par le fait que** la borne (3) comporte une commande de rotation (9) une commande de rotation (9) des lames pivotantes (2), le lavage de ces dernières étant contrôlé par un dispositif de déclenchement automatique actionné par le mécanisme de rotation desdites lames pivotantes.

7. Dispositif selon l'une quelconque des revendications précédentes, **se caractérisant par le fait que** la borne (3) comporte sur sa face avant un robinet (11) pour le lavage des mains et la boisson des chiens et éventuellement le nettoyage des abords de l'installation à l'aide d'un tuyau.

8. Dispositif selon l'une quelconque des revendications précédentes, **se caractérisant par le fait que** la borne (3) comporte un distributeur de gants ou de papier de nettoyage.

9. Dispositif selon la revendication 8, **se caractérisant par le fait que** le distributeur fonctionne grâce à des jetons distribués par exemple par la mairie.

10. Dispositif selon les revendications 8 et 9, **se caractérisant par le fait que** la borne (3) comporte un réceptacle pour jeter les gants ou de papiers de nettoyage pris au distributeur.

11. Dispositif selon l'une quelconque des revendications précédentes, **se caractérisant par le fait que** la borne (3) comporte un "coup de poing" de signalisation en cas de morsure.

12. Dispositif selon l'une quelconque des revendications précédentes, **se caractérisant par le fait que** la borne (3) est signalée par des bandes fluorescentes ou des leds solaires.

13. Dispositif selon l'une quelconque des revendications précédentes, **se caractérisant par le fait que** le bac (2) est encastré dans le sol.
